# EUROPEAN PATENT SPECIFICATION

(11) **EP 1 279 567 B1**
(45) Date of publication and mention of the grant of the patent: **30.08.2006**
(21) Application number: 02016210.3
(22) Date of filing: 18.07.2002
(51) Int. Cl.: B60R 21/16

(54) **Fastening element for a curtain airbag**
Befestigungselement für einen Seitenairbag
Elément de fixation pour un airbag rideau

(30) Priority: 26.07.2001 DE 20112342 U
(43) Date of publication of application: 29.01.2003
(73) Proprietor: KEY SAFETY SYSTEMS, INC., Sterling Heights, MI 48314 (US)
(72) Inventor: Mühlbach, Steffen, 63329 Egelsbach (DE)
(74) Representative: Müller-Boré & Partner Patentanwälte

(56) References cited:
- EP-A- 0 978 421
- WO-A-02/28691
- DE-U- 20 014 568
- DE-U- 20 101 118
- US-A- 5 588 672

## Description

The present invention relates to a fastening element for a curtain airbag and a curtain airbag that can be arranged on a vehicle.

So-called curtain airbags are known which are arranged in the roof lining of a vehicle and extend in the case of a crash after their inflation along the sides of the vehicle, so that the persons present in the vehicle are protected from injuries which can arise from the impact of a body part, in particular the head, against the sidewalls or the side windows of the vehicle. The lower corners of this type of curtain airbag, in particular the corner arranged at the front in the vehicle, are connected to a fastening element via a cord or string, whereby the airbag, the string and the fastening element form a unit. The fastening element locks into a recess of the vehicle. By means of a suitable mechanism, it can be ensured that the curtain airbag is sufficiently tensed and for instance an arm or head of a person can be prevented from getting caught between the airbag and the sidewall or the side window of the vehicle.

The fastening elements can, however, be damaged before or during the installation of the curtain airbag, which leads to the entire airbag being no longer usable and having to be thrown away.

EP 0 978 421 A1 discloses an airbag of which a part is fastened to a vehicle by screws.

DE 201 0118 U1 discloses an airbag system in which a tensioning strap which fixes the gas bag in position is fully looped around the wall of the chamber and fastened to the wall and to the vehicle in such a manner that inflating the chamber causes a displacement of the tensioning strap and a tightening of the tension strap.

US 5 588 672 discloses an airbag which is secured by at least three securing points located inside the vehicle adjacent to the window area.

It is the object of the invention to provide a fastening element and a curtain airbag, which enable an improved and more effective use of the curtain airbag.

According to the invention, this object is achieved by a fastening element with the characterising features of claim 1 and by a curtain airbag with the characterising features of claim 8.

Preferred embodiments arise from the corresponding subclaims.

In accordance with the invention, a fastening element for a curtain airbag is provided, which comprises a locking device and a clamping device, whereby the locking device can be locked in a detachable manner into a suitable place on a vehicle, in particular in a recess on a vehicle part, and whereby in the clamping device a section of the curtain airbag can be arranged in a detachable manner and in a secure position with relation to the fastening element.

Due to the fact that the fastening element can be arranged or secured in a detachable manner to a section of the curtain airbag, it is possible that the fastening element can be arranged to the curtain airbag just before or during the actual installation in the vehicle. In this way the risk of rupture or destruction of the fastening element during preparatory work before the installation of the curtain airbag is reduced. In addition, this way a faulty fastening element can easily be replaced. Furthermore, there is the advantage that one and the same curtain airbag or the same curtain airbag model can be installed in various vehicles, whereby only the fastening element needs to be exchanged. In addition, there is the advantage that the position of the fastening element in relation to the curtain airbag can be varied according to vehicle type.

The clamping device is a recess in a sidewall of the fastening element, in which the airbag section can be arranged and which preferably extends along the entire height of the fastening element. In this way the airbag section can be arranged in the fastening element in a simple manner.

In addition, the recess forming the clamping device displays an essentially constant width and an essentially cylindrical widening at an intermediate section, in which a thickening in the airbag section can be arranged. The cylindrical widening is preferably essentially hemispherical at the end which is arranged on the inside of the fastening element. This way the secure support of the airbag section in the fastening element can be increased even further.

In a preferred embodiment, the recess forming the clamping device is furthermore, on the upper side of the fastening element, partly widened to one side, which differs from the side in which the recess is formed. Due to the provision of a widening in the surface of the fastening element, it can be furthermore ensured that the airbag section arrange d in the fastening element is securely held and can be guided in a preferred direction with relation to the fastening element.

The locking device is preferably a projection at least partly formed on the fastening element and which projects from at least one side surface of the fastening element and is arranged on the bottom region or in proximity to the bottom side of the fastening element. Due to the provision of a projection on the fastening element, the fastening element can be securely locked into a recess in a vehicle part.

The locking device furthermore preferably comprises a border which projects essentially peripherally from the side of the fastening element and which is arranged in the upper region or in proximity to the upper side of the fastening element. Due to the provision of the ledge-type border it is possible that the fastening element is held securely in a recess in the vehicle part and falling or sliding of the fastening element into the inside of the vehicle part can be avoided.

The material out of which the fastening element is manufactured, preferably displays a high rigidity. In this way it is ensured that the fastening element on the one hand can securely hold the curtain airbag section even under a high load and on the other hand be securely held in the recess in the vehicle part.

In accordance with the invention, a curtain airbag which can be arranged in a vehicle is furthermore provided, whereby the curtain airbag comprises a fastening element, as described above, and an airbag, whereby the airbag comprises a section which can be arranged in the fastening element in a detachable manner and in a secure position with relation to the fastening element.

The section of the airbag is preferably oblong and/or manufactured from the same material as the airbag.

In addition, the section of the airbag can be a cord which can be securely connected to the airbag, preferably by means of sewing.

In a preferred embodiment, the section displays at its free end a thickening. As a result a secure clamping of the section in the fastening element can be achieved. The thickening is preferably essentially spherical in shape. Due to the provision of a spherical shape for the thickening, it can be ensured that the section is held in the preferably cylindrical recess in the fastening element in an even more secure manner.

The thickening preferably consists of a knot in the section. Due to the provision of a knot, a thickening in the section of the airbag can be designed in a simple manner.

The thickening can furthermore preferably consist of a material thickening.

In a preferred embodiment, the section can be arranged in the fastening element by means of clamping or fixing.

Further objects, characteristics and advantages of the present invention will be described in more detail by means of a preferred embodiment with reference to the figures, in which:
Fig. 1 is a part view of a curtain airbag in accordance with a preferred embodiment of the invention;
Fig. 2 is perspective view of a fastening element in accordance with a preferred embodiment of the present invention;
Fig. 3 is a sectional view of a fastening element according to Fig.2 along line 3-3;
Fig. 4 is a sectional view of a fastening element according to Fig.2 along line 4-4;
Fig. 5 is a part view of a section of the curtain airbag according to the invention in accordance with an embodiment of the invention; and
Fig. 6 is a part view of a further embodiment of a section of the curtain airbag according to the invention.

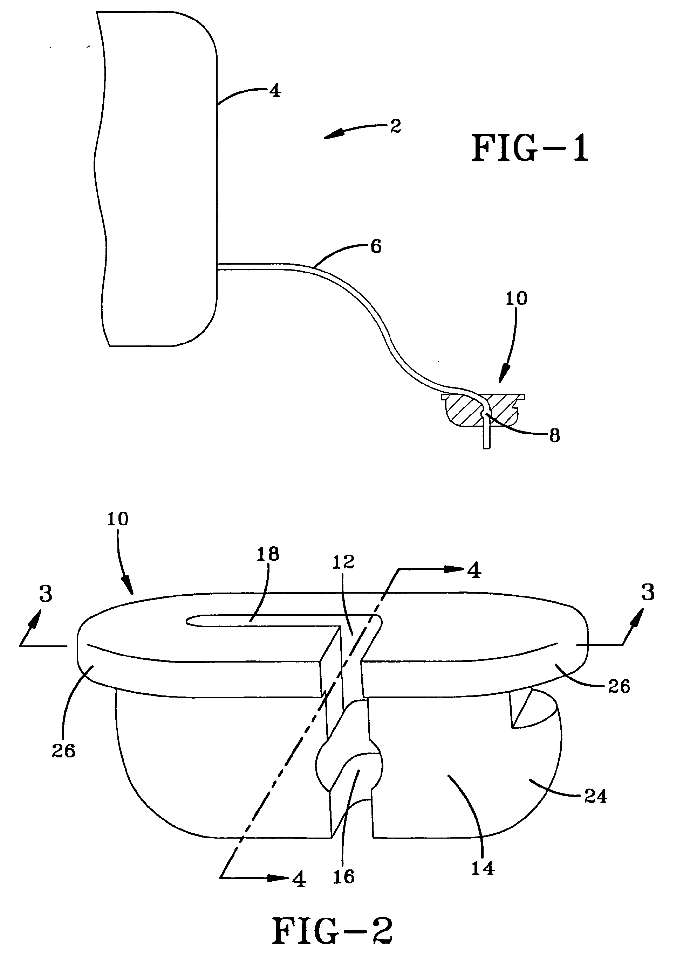

Fig. 1 shows a top view of a curtain airbag 2 according to a preferred embodiment of the invention. The curtain airbag 2 comprises an airbag 4, an oblong section 6 and a fastening element 10 clamped in a detachable manner to the oblong section 6. In a preferred embodiment, the oblong section 6 of the curtain airbag 4 displays a thickening 8 in the region of its free end. The curtain airbag 2 is preferably arranged in the roof lining of a vehicle along the side. The fastening element 10 locks into a suitable place of the vehicle. In the event of a crash, the curtain airbag 2 is released and emerges from the roof lining of the vehicle. By means of a suitable tensioning device (not represented) the curtain airbag 2 can be securely held along the side of the vehicle, whereby the tensioning device exerts a force, preferably a pulling force, onto the unfolding airbag 4 over the oblong section 6, which is clamped in the fastening element.

The fastening element 10 according to the invention is described below with reference to Figs. 2 to 4.

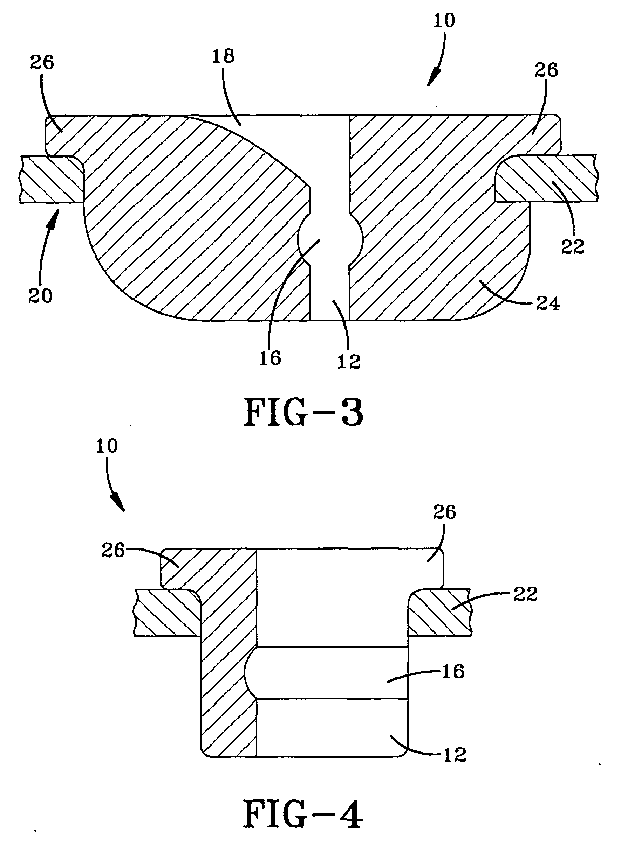

Fig. 2 shows a perspective view, Fig. 3 a sectional view along line 3-3 (longitudinal section) of Fig. 2 and Fig. 4 shows a sectional view along line 4-4 (cross section) of Fig. 2 of the fastening element 10 in accordance with a preferred embodiment of the present invention. The fastening element 10 according to the invention comprises a recess 12 in a sidewall 14, preferably in one of the two longitudinal sidewalls, whereby the recess 12 extends essentially over the entire height of the fastening element 10. The recess 12 is preferably a groove or slot in the sidewall 14 of the fastening element 10. It is also conceivable, however, to design the recess 12 in another suitable shape. It is furthermore conceivable that the recess 12 extends over merely part of the height of the sidewall 14. The recess 12 is provided to clamp or arrange or fix or fasten the fastening element 10 in a detachable manner on the not represented oblong section 6 of a curtain airbag 2, i.e. for instance in the shape of a cord fastened to the curtain airbag 2.

In addition the recess 12 displays a widening 16, which is preferably positioned in a bottom region of the recess 12. The widening 16 has an essentially cylindrical shape and is essentially hemispherical at the end positioned in the middle of the fastening element 10, as can be seen from Fig. 4. In this way, the widening 16 essentially has the shape of a borehole, which is perpendicular to the sidewall 14 and does not penetrate the fastening element 10, whereby the end of the borehole which lies inside the fastening element 10 and is preferably essentially hemispherical in shape clamps the thickening 8 of the oblong section 6 in an advantageous and secure manner in the fastening element 10.

In addition, the recess 12 of the fastening element 10 is preferably widened towards the upper side of the fastening element 10, as is shown by reference number 18. This widening 18 extends preferably in one direction, which differs from the direction, in which the side recess 12 is essentially shaped, preferably perpendicular thereto. The widening 18 is provided to guide or direct the section 6 (not represented) of a curtain airbag 4, clamped in the fastening element 10 in the recess 12 and the widening 16, in a desired direction. In addition, the widening 18 prevents an easy sliding out or detachment of the clamped airbag 10 section 4 from the fastening element 10.

During use, the fastening element 10, which was clamped to a not represented section 6 of a curtain airbag 4, preferably locks into a recess 20 in a vehicle part 22 (see Figs. 3 and 4). To ensure a secure locking of the fastening element 10 in the recess 20 in the vehicle part 22 in accordance with the present invention, the fastening element 10 comprises at least partly a projection or a catch 24, which extends away from the bottom side of the fastening element 10, preferably essentially to the side. To ensure as secure a support as possible of the fastening element 10 in the recess 20 of the vehicle part 22, the projection 24 is preferably located on the side, which is opposite the side or direction in which the widening 18 extends. Other suitable possibilities for locking the fastening element 10 in the recess 20 of the vehicle part 22 are, however, also conceivable, as long as the fastening element 10 is securely held in the recess 22.

In addition, the fastening element 10 according to the invention comprises a border or ledge 26 projecting essentially peripherally from the side of the fastening element 10, and which prevents the fastening element 10 according to the invention from falling through the recess 20 of the vehicle part 22. It is not necessary, however, that the border 26 be completely peripheral, it would also be conceivable for it to be provided on only two opposite sides of the fastening element 10.

The fastening element 10 according to the invention is, as described above, preferably fastened to the oblong section 6 of the curtain airbag 4. The oblong section 6 of the curtain airbag 4 comprises in a preferred embodiment a thickening 8 at a suitable position (see Fig. 1), in order to be securely held in the fastening element 10, in particular in the widening 16.

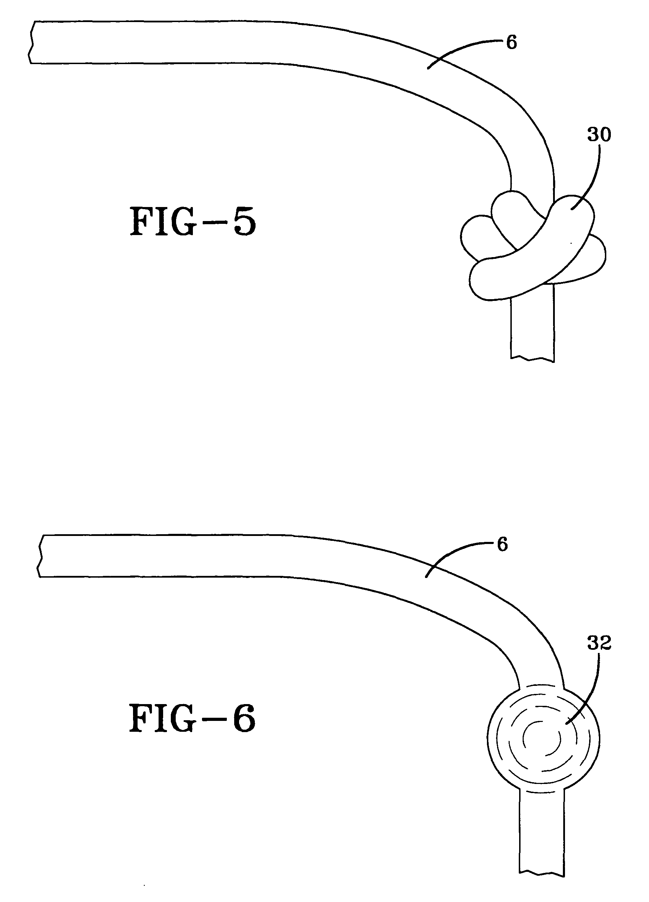

Figs. 5 and 6 show preferred embodiments of the oblong section, which can be fastened to the airbag 4 of the curtain airbag 4 according to the invention. In a preferred embodiment, the thickening 8 is a knot 30 in the oblong section 6. The knot 30 can be designed in a simple manner in the oblong section 6. In addition, the position of the thickening 8 in the oblong section 6 can thus be suitably varied, if the curtain airbag 2 according to the invention is to be used in different vehicle models, for instance. In addition, the thickening 8 can also be designed as a material thickening 32 in the material of the oblong section 6. It is conceivable, however, to use any other suitable method, in order to provide a thickening 8 in the oblong section 6. For instance, it would be furthermore conceivable additionally to incorporate globules or other suitable shapes from a suitable material in the oblong section 6.

The oblong section 6 can preferably be manufactured from the same material as the airbag 4 itself. In addition, it can be provided that the oblong section 6 is sewn to the airbag 4 of the curtain airbag 2. Any other suitable connection form, however, such as for instance gluing, is also possible between the oblong section 6 and the airbag 4.

## Claims

1. Fastening element (10) for a curtain airbag (2), comprising: a locking device (24, 26) which can be locked in a detachable manner into a suitable place of a vehicle; and a clamping device (12, 16, 18), in which a section (6) of the curtain airbag (2) can be arranged in a detachable manner and in a secure position with relation to the fastening element (10)
whereby the clamping device (12, 16, 18) is a recess (12) in a sidewall (14) of the fastening element (10), in which the airbag section (6) can be arranged.

2. Fastening element (10) according to claim 1, whereby the recess (12) extends along the entire height of the fastening element (10).

3. Fastening element (10) according to claim 2, whereby the recess (12) forming the clamping device (12, 16, 18) displays an essentially constant width and an essentially cylindrical widening (16) at an intermediate section thereof, in which a thickening (8; 30; 32) formed in the airbag section (6) can be arranged.

4. Fastening element (10) according to one of claims 2 or 3, whereby the recess (12) forming the clamping device (12, 16, 18) is furthermore, on the upper side of the fastening element (10), partly widened (18) to one side, which differs from the side in which the recess (12) is formed.

5. Fastening element (10) according to one of the preceding claims, whereby the locking device (24, 26) is a projection (24) at least partly formed on the fastening element (10), which projects from at least one side surface of the fastening element (10) and is arranged on the bottom region of the fastening element (10).

6. Fastening element (10) according to one of the preceding claims, whereby the locking device (24, 26) furthermore comprises a border (26) which projects at least partly peripherally from the side of the fastening element (10) and which is arranged in the upper region of the fastening element (10).

7. Fastening element (10) according to one of the preceding claims, whereby the material out of which the fastening device (10) is manufactured displays a high rigidity.

8. Curtain airbag (2), which can be arranged in a vehicle, comprising: a fastening element (10) according to one of the preceding claims, an airbag (4), which comprises a section (6) which can be arranged in the fastening element (10) in a detachable manner and in a secure position with relation to the fastening element (10).

9. Curtain airbag (2) according to claim 8, whereby the section (6) is oblong.

10. Curtain airbag (2) according to one of claims 8 or 9, whereby the section (6) is manufactured from the same material as the airbag (4).

11. Curtain airbag (2) according to one of claims 8 to 10, whereby the section (6) consists of a cord, which is securely connected to the airbag (4), preferably by means of sewing.

12. Curtain airbag (2) according to one of claims 8 to 11, whereby the section (6) comprises a thickening (8; 30; 32) at its free end.

13. Curtain airbag (2) according to claim 12, whereby the thickening (8; 30; 32) is essentially spherical.

14. Curtain airbag (2) according to one of claims 12 or 13, whereby the thickening (8; 30; 32) consists of a knot (30) located in the section (6).

15. Curtain airbag (2) according to one of claims 12 to 14, whereby the thickening (8; 30; 32) consists of a material thickening (32).

16. Curtain airbag (2) according to one of claims 8 to 15, whereby the section (6) can be arranged by means of clamping or fixing in the fastening element (10).

## Patentansprüche

1. Befestigungselement (10) für einen Curtain-Airbag (2), welches umfaßt:
eine Verrastungseinrichtung (24, 26), welche lösbar an einem geeigneten Ort eines Fahrzeugs verrastbar ist; und
eine Klemmeinrichtung (12, 16, 18) in welcher ein Abschnitt (6) des Curtain-Airbags (2) lösbar und relativ zum Befestigungselement (10) lagegesichert anordenbar ist,
wobei die Klemmeinrichtung (12, 16, 18) eine Ausnehmung (12) in einer Seitenwand (14) des Befestigungselements (10) ist, in welcher der Airbagabschnitt (6) anordenbar ist.

2. Befestigungselement (10) gemäß Anspruch 1, wobei die Ausnehmung (12) sich entlang der gesamten Höhe des Befestigungselements (10) erstreckt.

3. Befestigungselement (10) gemäß Anspruch 2, wobei die die Klemmeinrichtung (12, 16, 18) ausbildende Ausnehmung (12) von im wesentlichen konstanter Breite ist und eine im wesentlichen zylindrische Aufweitung (16) an einem Zwischenabschnitt davon aufweist, in welcher eine in dem Airbagabschnitt (6) ausgebildete Verdickung (8; 30; 32) anordenbar ist.

4. Befestigungselement (10) gemäß einem der Ansprüche 2 oder 3, wobei die die Klemmeinrichtung (12, 16, 18) ausbildende Ausnehmung (12) ferner an der oberen Seite des Befestigungselements (10) zu einer Seite hin, welche verschieden ist von der Seite, in welcher die Ausnehmung (12) ausgebildet ist, teilweise aufgeweitet (18) ist.

5. Befestigungselement (10) gemäß einem der vorangehenden Ansprüche, wobei die Verrastungseinrichtung (24, 26) ein an dem Befestigungselement (10) zumindest teilweise ausgebildeter Vorsprung (24) ist, welcher von zumindest einer Seitenfläche des Befestigungselements (10) vorspringt und in bzw. an dem unteren Bereich des Befestigungselements (10) angeordnet ist.

6. Befestigungselement (10) gemäß einem der vorangehenden Ansprüche, wobei die Verrastungseinrichtung (24, 26) ferner einen zumindest teilweise umfänglich seitlich von dem Befestigungselement (10) vorspringenden Rand (26) umfaßt, und welcher im oberen Bereich des Befestigungselements (10) angeordnet ist.

7. Befestigungselement (10) gemäß einem der vorangehenden Ansprüche, wobei das Material aus welchem das Befestigungselement (10) hergestellt ist, eine hohe Steifigkeit aufweist.

8. Curtain-Airbag (2), welcher in einem Fahrzeug anordenbar ist, umfassend:
ein Befestigungselement (10) gemäß einem der vorangehenden Ansprüche,
einen Gassack (4), welcher einen Abschnitt (6) aufweist der lösbar und relativ zum Befestigungselement (10) lagegesichert in dem Befestigungselement (10) anordenbar ist

9. Curtain-Airbag (2) gemäß Anspruch 8, wobei der Abschnitt (6) länglich ist.

10. Curtain-Airbag (2) gemäß einem der Ansprüche 8 oder 9, wobei der Abschnitt (6) aus demselben Material wie der Gassack (4) hergestellt ist.

11. Curtain-Airbag (2) gemäß einem der Ansprüche 8 bis 10, wobei der Abschnitt (6) aus einer Schnur besteht, welche mit dem Gassack (4) fest, bevorzugt durch Vernähen, verbindbar ist.

12. Curtain-Airbag (2) gemäß einem der Ansprüche 8 bis 11, wobei der Abschnitt (6) an seinem freien Ende eine Verdickung (8; 30; 32) umfaßt.

13. Curtain-Airbag (2) gemäß Anspruch 12, wobei die Verdickung (8; 30; 32) im wesentlichen kugelförmig ist.

14. Curtain-Airbag (2) gemäß einem der Ansprüche 12 oder 13, wobei die Verdikkung (8; 30; 32) ein in dem Abschnitt (6) angeordneter Knoten (30) ist.

15. Curtain-Airbag (2) gemäß einem der Ansprüche 12 bis 14, wobei die Verdikkung (8; 30; 32) aus einer Materialverdickung (32) besteht.

16. Curtain-Airbag (2) gemäß einem der Ansprüche 8 bis 15, wobei der Abschnitt (6) durch Festklemmen oder Festlegen in dem Befestigungselement (10) anordenbar ist.

## Revendications

1. Elément de fixation (10) pour un coussin d'air de type rideau (2), comprenant: un dispositif de verrouillage (24, 26) pouvant être verrouillé de manière amovible dans un emplacement approprié d'un véhicule; et un dispositif de serrage (12, 16, 18), dans lequel une section (6) du coussin d'air de type rideau (2) peut être agencée de manière amovible et dans une position sûre par rapport à l'élément de fixation (2)
le dispositif de serrage (12, 16, 18) étant constitué par un évidement (12) dans une paroi latérale (14) de l'élément de fixation (10), dans lequel la section du coussin d'air (6) peut être agencée.

2. Elément de fixation (10) selon la revendication 1, dans lequel l'évidement (12) s'étend le long de l'ensemble de la hauteur de l'élément de fixation (10).

3. Elément de fixation (10) selon la revendication 2, dans lequel l'évidement (12) constituant le dispositif de serrage (12, 16, 18) présente une largeur pratiquement constante et un élargissement pratiquement cylindrique (16) au niveau d'une section intermédiaire correspondante, dans laquelle un épaississement (8; 30; 32) formé dans la section du coussin d'air (6) peut être agencé.

4. Elément de fixation (10) selon l'une des revendications 2 ou 3, dans lequel l'évidement (12) constituant le dispositif de serrage (12, 16, 18) est en outre en partie élargi (18), sur le côté supérieur de l'élément de fixation (10), vers un côté différent du côté dans lequel est formé l'évidement (12).

5. Elément de fixation (10) selon l'une quelconque des revendications précédentes, dans lequel le dispositif de verrouillage (24, 26) est constitué par une saillie (24) formée au moins partiellement sur l'élément de fixation (10), débordant d'au moins une surface latérale de l'élément de fixation (10) et agencée sur la région inférieure de l'élément de fixation (10).

6. Elément de fixation (10) selon l'une quelconque des revendications précédentes, dans lequel le dispositif de verrouillage (24, 26) comprend en outre une bordure (26) débordant au moins en partie de manière périphérique à partir du côté de l'élément de fixation (10) et agencée dans la région supérieure de l'élément de fixation (10).

7. Elément de fixation (10) selon l'une quelconque des revendications précédentes, dans lequel le matériau à partir duquel le dispositif de fixation (10) est fabriqué présente une rigidité élevée.

8. Coussin d'air de type rideau (2) pouvant être agencé dans un véhicule, comprenant: un élément de fixation (10) selon l'une quelconque des revendications précédentes, un coussin d'air (4), comprenant une section (6) pouvant être agencée de manière amovible dans l'élément de fixation (10), dans une position sûre par rapport à l'élément de fixation (10).

9. Coussin d'air de type rideau (2) selon la revendication 8, dans lequel la section (6) est oblongue.

10. Coussin d'air de type rideau (2) selon les revendications 8 ou 9, dans lequel la section (6) est fabriquée à partir du même matériau que le coussin d'air (4).

11. Coussin d'air de type rideau (2) selon l'une des revendications 8 à 10, dans lequel la section (6) est constituée par une corde, connectée fermement au coussin d'air (4), de préférence par couture.

12. Coussin d'air de type rideau (2) selon l'une des revendications 8 à 11, dans lequel la section (6) comprend un épaississement (8; 30; 32) au niveau de son extrémité libre.

13. Coussin d'air de type rideau (2) selon la revendication 12, dans lequel l'épaississement (8; 30; 32) est pratiquement sphérique.

14. Coussin d'air de type rideau (2) selon l'une des revendications 12 ou 13, dans lequel l'épaississement (8; 30; 32) est constitué par un noeud (30) agencé dans la section (6).

15. Coussin d'air de type rideau (2) selon l'une des revendications 12 à 14, dans lequel l'épaississement (8; 30; 32) est constitué par un épaississement de matériau (32).

16. Coussin d'air de type rideau (2) selon l'une des revendications 12 à 14, dans lequel la section (6) peut être agencée par serrage ou fixation dans l'élément de fixation (10).
